(19) Europäisches Patentamt / European Patent Office / Office européen des brevets

(11) **EP 4 323 733 B1**

(12) **EUROPEAN PATENT SPECIFICATION**

(45) Date of publication and mention
of the grant of the patent:
**29.04.2026 Bulletin 2026/18**

(21) Application number: **21782806.0**

(22) Date of filing: **20.08.2021**

(51) International Patent Classification (IPC):
**G01J 1/02** *(2006.01)*        **G01J 1/42** *(2006.01)*
**H05B 47/105** *(2020.01)*      **H05B 47/21** *(2020.01)*

(52) Cooperative Patent Classification (CPC):
**G01J 1/4228; G01J 1/02; H05B 47/105;**
**H05B 47/22;** G01J 2001/4247

(86) International application number:
**PCT/IB2021/057676**

(87) International publication number:
**WO 2022/219390 (20.10.2022 Gazette 2022/42)**

(54) **A SYSTEM FOR DETECTING LIGHT EMITTED BY ONE OR MORE OUTER LIGHT POINTS POSITIONED ON THE SIDES OF A ROAD**

SYSTEM ZUR DETEKTION VON LICHT, DAS VON EINEM ODER MEHREREN AUSSENLICHTPUNKTEN AUF DEN SEITEN EINER STRASSE EMITTIERT WIRD

SYSTÈME DE DÉTECTION DE LUMIÈRE ÉMISE PAR UN OU PLUSIEURS POINTS DE LUMIÈRE EXTÉRIEURS POSITIONNÉS SUR LES CÔTÉS D'UNE ROUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.04.2021 IT 202100009704**

(43) Date of publication of application:
**21.02.2024 Bulletin 2024/08**

(73) Proprietor: **Huna S.r.l.**
**20135 Milano (IT)**

(72) Inventor: **LICO, Santo**
**20135 Milano (IT)**

(74) Representative: **Penza, Giancarlo**
**Bugnion S.p.A.**
**Viale Lancetti, 17**
**20158 Milano (IT)**

(56) References cited:
WO-A1-2017/001233        WO-A1-90/03094
AU-A1- 2016 210 658        FR-A1- 2 976 662
GB-A- 2 368 905

• SINDHUJA K ET AL: "DETECTION OF FAULTY STREET LIGHTS USING HITCH HIKER", INTERNATIONAL JOURNAL OF ADVANCED RESEARCH IN MANAGEMENT ARCHITECTURE TECHNOLOGY AND ENGINEERING (IJARMATE), 6 March 2016 (2016-03-06), Internet, pages 39 - 44, XP055877920, Retrieved from the Internet <URL:https://www.ijarmate.com/index.php?option=com_login&task=download_volume_doc&fname=v2s6magna&foldertype=conference&id=105> [retrieved on 20220111]

**Description**

The object of the present invention is a system for detecting light emitted by one or more outer light points positioned on the sides of a road.

In particular, the field of application of the present invention is public highway lighting (lighting for urban roads, extra-urban roads, motorways, tunnels, etc.). The document WO 2017/001233 A1 discloses a system and a method for measuring light from one or more outdoor lamps on a road.

The proposed system for detecting light emitted is able to identify the lamp posts or light points present on the road, position the lamp posts or light points on a map by GPS coordinates, calculate the height thereof, measure the light emission and check correct operation thereof.

In the account that follows, the terms lamp post, lamp, lighting or light point will be used indifferently, and it is meant an "electric lamp for lighting roads and squares, consisting of a protective glass casing supported generally by a cast iron column or by a support embedded in the wall.

The device is completely autonomous and can be installed on any type of ground vehicle, even if not deliberately assigned to this function (for example, taxis, buses, delivery vans etc.).

In order to map street lamp posts, the known and most widespread approach is to send people physically to the location who use GPS (Global Positioning System) detectors and measuring instruments to position the various street lamps on a map.

Lighting is measured manually using a portable light meter.

The alternative, which is little used because of cost and authorization difficulties, is the use of piloted drones.

Faults are detected by following two different approaches:

- using maintenance teams that periodically at night (e.g. once a month) travel the streets to check;
- using sensors installed inside each lamp or light point.

Detecting lamp posts manually is very time-consuming. On average, a person is not able to detect more than a few hundred points per day with basic instruments, whereas the same person could detect up to 600 a day using dedicated apps.

With the proposed system, up to 700 lamp posts an hour can be mapped.

There is the same problem with detecting lighting. This task is performed manually and takes a long time to be completed and this is the reason why until today it is limited to small sections of road taken as samples.

Fault signalling devices of known type have two technical problems:

1. they are unable to detect the deterioration or growth of vegetation around the lamp but only a total fault (lamp off);
2. they require the installation of a device inside each lamp.

This second point makes it practically impossible to apply this system in plants that have been the object of an intervention in the last 5 years and for which the installation of these devices was not envisaged.

The technical task on which the present invention is based is to propose a system for detecting light emitted by one or more outer light points positioned on the sides of a road that is able to offer alternative systems for the following three applications:

- GPS detecting and positioning of light points for road lighting on a map;
- detecting ground lighting values of road lighting systems;
- detecting faults, malfunctions, decay or growth of vegetation on road lighting systems. According to the invention there is provided a system as defined in claim 1 and a method as defined in claim 10.

Further developments of the invention are the subject of the dependent claims.

In particular, the object of the present invention is to provide a system for detecting light emitted by one or more outer light points positioned on a road that enables the tasks to be completed that are the object of the invention much more rapidly than with the mainly manual methods that are used today.

A further object of the present invention is to provide a system for detecting light emitted by one or more outer light points positioned on a road that, in the case of monitoring the operation of the outer light points, enables this control to be applied regardless of the technical features of the system and without it being necessary to install a detecting device in each lamp.

A further object of the present invention is to create a very detailed mapping of the state of lighting on municipal roads and to detect faulty or malfunctioning street lamps and the growth of vegetation around the lamps. Another object of the present invention is to enable the quality of the air on the public roads to be detected.

Further, it enables the actual quantity of light emitted by the lamps to be controlled, which is not possible using the devices currently used in the prior art.

A further object of the present invention is to provide a system for detecting light emitted by one or more outer light points positioned on a road that is in real time and efficient.

Further characteristics and advantages of the present invention will become more apparent from the approximate and thus non-limiting description of a preferred, but not exclusive, embodiment of a system for detecting light emitted by one or more outer light points positioned on the sides of a road as illustrated in the accompanying drawings, in which:

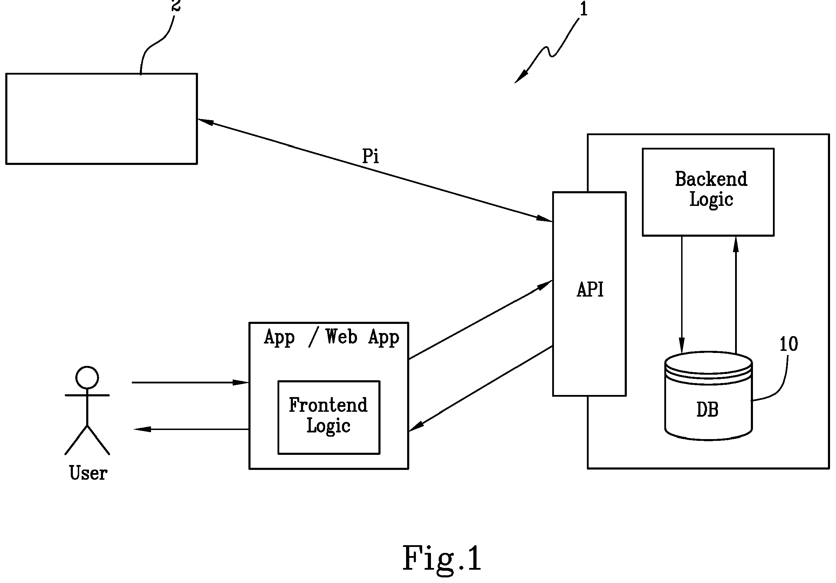

- figure 1 illustrates schematically the block diagrams of the system for detecting the light emitted, according to the present invention;
- figure 2 illustrates a detail of the detecting system, according to the present invention;
- figure 3 illustrates the brightness peaks of the light points projected onto the road surface;
- figure 4 illustrates schematically an example of the calculation of some characteristic parameters of the system.

In a first aspect, the present invention discloses a system 1 for detecting light emitted by one or more outer light points P positioned on a road.

The system comprises a detecting device 2 installed on a ground vehicle configured to detect the light and other parameters coming from two different sides of the road travelled by said ground vehicle;

In particular, the detecting device 2 comprises at least two light meters 6, 7 positioned parallel to the road surface. Preferably, the detecting device 2 is installed on the roof of the ground vehicle.

Each detecting device 2 comprises an ID unique identification number.

The system 1 further comprises a processing unit configured to process parameters relating to said one or more light points P, in data connection with the detecting device 2, on the basis of parameters detected by said detecting device (2) by triangulation between the advancement movement of the ground vehicle and the values measured by the light meters 6, 7. The system 1 further comprises an electric power supply source configured to power the various elements of the detecting device 2.

In general, it should be noted that in the present context and in the subsequent claims, the processing unit is considered to be divided into distinct functional modules (memory modules or operating modules) for the sole purpose of describing the functionalities thereof clearly and completely. This processing unit can consist of a single electronic device, appropriately programmed to perform the functionalities described, and the different modules can correspond to hardware entities and/or routine software that are part of the programmed device.

Alternatively, or in addition, these functions can be performed by a plurality of electronic devices over which the aforesaid functional modules can be distributed.

The processing unit can moreover rely on one or more processors to execute the instructions contained in the memory modules.

Advantageously, the detecting device 2 comprises a medium precision sensor GPS < 1 meter, a data transceiving device (for example, provided with a SIM card), and at least two light meters 6, 7 positioned parallel to the ground.

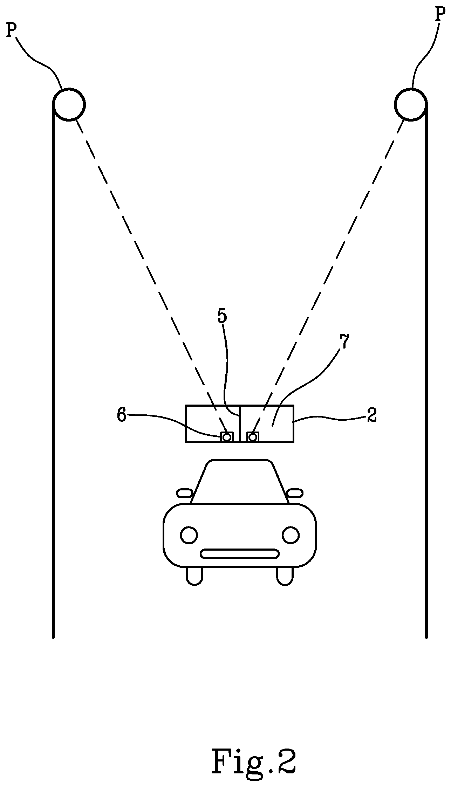

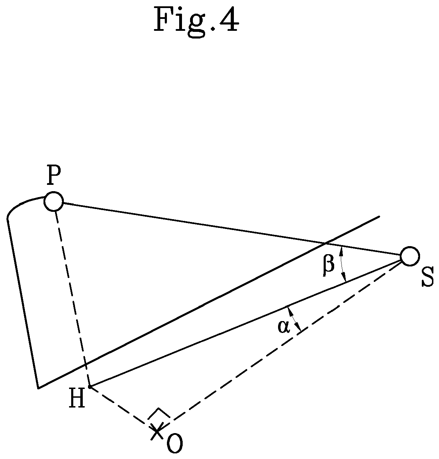

A light meter means a measuring instrument for measuring the lighting, consisting of a fixed part (instrument body) and a movable part that contains the sensor, consisting for example of a (photovoltaic cell or other photoelectric cells ) transducer that under the effect of the light energy reacts to trigger an electrical current (photoelectric effect) that is detected by a galvanometer the scale of which is suitably calibrated in lux. Preferably, as illustrated in figure 2, the two light meters 6, 7 are separated from one another by a dividing element 5, located between the two, configured to divide the light coming from light points P placed on two different sides of the carriageway of the road travelled by the ground vehicle. Lastly, the detecting device 2 comprises a sensor configured to identify the direction of origin of the light emitted by the light point P (see figure 4, angles $\alpha$ and $\beta$).

The detecting device 2 is contained inside a box-shaped casing, which is not illustrated in the figures, in which at least the upper part consists of or comprises a part of material that is transparent to the light emitted by the light points P, such that the emitted light can reach the light meters 6, 7 and be detected correctly. The GPS sensor, the data transceiving device, the two light meters 6, 7, the divider 5, and the sensor configured to identify the direction of origin of the emitted light are contained inside the box-shaped body of the detecting device 2.

Advantageously, one part of the upper wall of the box-shaped casing consists of a material configured to focus on and receive the light beam and protect the light meters placed inside the detecting device 2.

In particular, the detecting device 2 is configured to perform measurements at a dynamic frequency on the basis of the speed of movement of the ground vehicle, preferably at a frequency comprised between 10 Hz and 20 Hz. Advantageously, the measurement dynamic frequency is 15Hz.

The system 1 comprises a remote database 10, comprising parameters Pi that are characteristic of the light point P bodies.

In particular, the characteristic parameters Pi can be one or more of at least the latitude and longitude of the lamp P, the height from the ground of the lamp P, the installation tilt and rotation of the lamp P and photometric data, like for example power, luminous flux and spatial diffusion thereof.

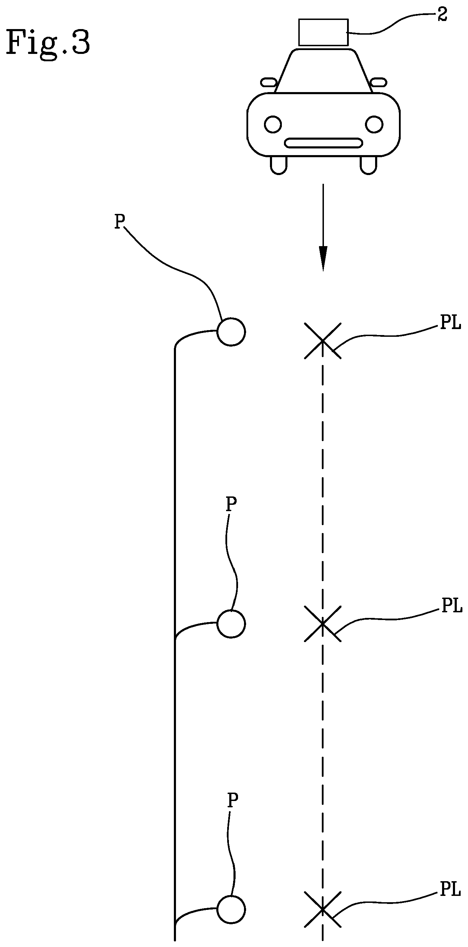

Advantageously, the processing unit comprises a first calculation module configured to calculate the exact positioning and the height from the ground of each light point P. This calculation is shown schematically in figure 4, in which the light point is indicated by P, H is the projection to the ground (road surface) of the light point P, S is the detecting device 2 placed on the vehicle, O indicates the detected brightness peak (indicated in figure 3 by PL), OS the known distance detected owing to the help of the GPS, the angles $\alpha$ and $\beta$ measured by the detection sensor detecting the direction of the light beam. The first module is thus configured to make the following calculations:

$$\text{distance } SH = OS/(\cos(\alpha)); OH = tg\ (\alpha); PH = SH * tg(\beta)$$

Advantageously, the processing unit comprises a second calculation module configured to calculate the exact positioning and the height from the ground of each light point P.

The system 1 comprises a remote database 10 in which all the detected positioning measurements of the light points P and of the light parameters detected are stored and recorded.

Advantageously, the processing unit comprises a third module configured to detect faulty, malfunctioning lighting bodies P and/or detect the presence of vegetation growth around the light point.

The processing unit comprises a comparison module configured to compare the data on the lamp posts P identified by the detecting device 2 with the recorded data present in the database 10. The comparison module classifies that determined light point P as faulty, malfunctioning and/or presence of growth of vegetation (for example trees, creepers, etc) around the light point P. This classification is implemented by the comparison module for comparing the processing unit in the following manner:

- if in the database 10 there is a lamp post P, but this is not detected by the detecting device 2, then that lamp post P is indicated as faulty by the processing unit;
- if the lamp post P is detected but from the comparison with the recorded data present in the database 10 the brightness value diminished over time then the lamp P is indicated by the processing unit as worn or as having surrounding vegetation growth;
- if the lamp post is present but the brightness thereof varies significantly between one measurement and the next, then the lamp P is malfunctioning. Advantageously, the system 1 comprises a display module configured to generate a map of the roads with the detected light points P and comprises a personal electronic device associated with a user, configured to display the detected data through a suitable graphic interface.

In one particular embodiment of the present invention, the detecting device 2 is configured to detect parameters identifying the air quality and comprises a sensor for detecting the air quality and said processing unit is configured to process data relating to environmental parameters linked to air quality.

Some non-limiting examples of air quality parameters comprise PM2.5, PM5, PM10, $CO_2$.

It is also possible to provide the device 2 with a video camera to permit, in the zones where the faults are detected, photographic surveys to be made and to permit an operator or software to check what the problem is.

In addition to the information on lighting, the device can be connected to further sensors, for example air quality sensors, accelerometers or the like.

The data of these sensors can be read and saved in the remote database 10 so as to form a very detailed map of the measured parameters, applying the same techniques used to analyse and record the lightings.

Optionally, accelerometers can be used to create a map of the state of the road surface.

By the detecting device 2, for example installed on the roof of a ground vehicle, it is thus possible to create a very detailed mapping of the state of lighting of municipal roads and of air quality, it is further possible to detect faulty or malfunctioning lamps and the growth of vegetation around the lamps.

In other words, the system 1 may consist of the detecting device installable on a vehicle, and a Cloud computer infrastructure that analyses and records the data detected by the device. The data are shown to the user through a graphic user interface, for example, web, mobile app (iOS or Android), computer programme.

The device may take measurements at a dynamic frequency on the basis of the movement speed of the ground vehicle. This information is preferably first saved to a local memory and, as soon as possible, the measurements are sent remotely to the Cloud infrastructure, which analyses the measurements, stores them and makes them available for consultation by the user.

For example, with a sampling frequency equal to 15Hz, the system is able to operate at a maximum speed of 54 km/h, maintaining the positioning uncertainty below 1 metre.

The data are shown to the user in aggregate form by a path plotted on a map. The colour in the map indicates the detected light intensity. The data are also recorded so as to detect the variations over time of the measured parameters.

The system can also be connected to a database containing the information on the lighting bodies. Specifically, the database contains the following data:

- latitude and longitude of the lamp;
- height of the lamp;
- installation tilt and rotation of the lamp;
- photometric data (preferably power, luminous flux and spatial diffusion thereof).

The database could also contain other additional information, the above information is the information used by the system 1.

The device is able to measure separately the lighting coming from the two sides of the carriageway. For each side, it is possible to identify the brightness peaks PL in the travelled path. They enable the positioning of the lamps to be defined.

The exact positioning of the lamp post and the height thereof are calculated by the method illustrated schematically in figures 3 and 4.

The data on the positioning and height of the lamp posts are sent to a remote database. In order to increase the degree of positioning precision and to reduce the uncertainty about the measurement, the device makes multiple measurements during the transit along the carriageway.

Measuring lightings on the ground

The data on the database are used to project onto the ground the measurement detected on the roof of the vehicle.

It is known that the calculation of the lighting expressed in lux on one point is obtained by the following formula:

$$E = \sum_{k=1}^{NL} \frac{I_k}{d_k^2} \cos \varepsilon_k$$

In which:

$I_k$ - Luminous flux *(Lumen)* emitted by the k-th lamp in the direction of the point
$d_k$ - Distance between the point and the k-th lamp
$\varepsilon_k$ - Angle of incidence of the k-th lamp
$NL$ - Number of lamps included in the calculation for that road segment

The measurement of the lighting on the roof of the vehicle will thus be calculable by:

$$E_v = \sum_{k=1}^{NL} \frac{I_{v_k} \cos^3 \varepsilon_{v_k}}{(H_{L_k} - H_m)^2}$$

$H_{L_k}$ - **Height** from the ground of the k-th lamp
$H_m$ - **Height from the ground of the measuring instrument**

The measurement on the ground on the other hand v

$$E_g = \sum_{k=1}^{NL} \frac{I_{g_k} \cos^3 \varepsilon_{g_k}}{H_{L_k}^2}$$

can also be calculated because all the geometrical parameters are known (the position of the measurement by GPS, the positioning of the post by database).

So the measured lighting value vm can be compared with the theoretical value vt. The ratio between the two can be defined as a maintenance factor:

$$f_m = \frac{E_{vm}}{E_{vt}}$$

which takes into account all factors (wear, dirt etc..) that influence the actual luminous flux emitted by the lamp once it is placed in operation. The value of lighting on the ground is thus obtainable by the following formula:

$$E_g = f_m \sum_{k=1}^{NL} \frac{I_{g_k} \cos^3 \varepsilon_{g_k}}{H_{L_k}^{\ 2}}$$

In order to improve the reliability of the measurement, the system takes multiple measurements in the same section of road, also by different sensors. These measurements are collected, analysed and measurement errors are corrected, using statistical analysis techniques.

Faulty lighting bodies are detected according to the present invention by analysing the variations in brightness along the path and by comparison with the recorded history. All the measurements are saved and recorded in a database 10.

As seen above in the description, the system is able to detect the positioning of the lamp. The data on the lamp posts identified by the device are compared with those found in the database 10. If in the latter there is a lamp post P, but this is not detected by the device, then that lamp post is indicated as faulty.

If the lamp post is detected but the brightness value has declined over time, the lamp is worn or vegetation has grown around it.

If the lamp post is present but the brightness thereof varies significantly between one measurement and the other, then the lamp P is malfunctioning.

The system also takes account of the time in which the measurement was taken because, as is known, lighting systems are often equipped with systems for reducing the luminous flux according to the time of day.

In addition to the information on lighting, the device can be connected to further sensors, for example air quality sensors, accelerometers or the like. The data of these sensors can be read and saved in the database so as to form a very detailed map of the measured parameters, applying the same techniques to analyse and record the lighting.

The accelerometers can be used to create a map of the state of the road surface.

In a second aspect, the present invention discloses a method for detecting light emitted by one or more outer light points P positioned on a road, comprising the steps of:

- installing a detecting device 2 on a ground vehicle;
- detecting, by said detecting device 2, the light coming from two different sides of the road travelled by said ground vehicle;
- processing characteristic data relating to said one or more light points P;
- powering electrically the various elements of the detecting device 2.

In a third aspect, the present invention discloses a ground vehicle comprising a system (1) according to anyone of claims 1 to 9, wherein the detecting device 2 installed on the roof configured to detect the light coming from two different sides of the road travelled by said ground vehicle.

As a person skilled in the art can well understand, the invention allows the drawbacks to be overcome that are highlighted above with reference to the prior art.

In particular, the present invention enables the efficiency and the quality of the parameters to be improved that were detected during mapping of the open-air light points on roads. In particular, the system of the present invention enables up to 700 lamp posts to be mapped in an hour.

The present invention uses a single detecting device 2 rather than multiple sensors positioned at a fixed distance from one another.

Further, it enables the lighting on the ground to be measured not just by the geometric parameters but also by information on the photometry of the lamps (the manner in which the lamp spreads the light) to obtain a more precise result.

The present invention enables faulty or worn lamps to be identified without the assistance of cameras, simply by analysing the brightness values.

It is clear that the specific features are described in relation to different embodiments of the invention with an exemplary and non-limiting intent. Obviously a person skilled in the art can make further modifications and variants to the present invention, in order to satisfy contingent and specific needs. For example, the technical features described in relation to an embodiment of the invention can be extrapolated therefrom and applied to other embodiments of the invention. Such modifications and variations are moreover embraced within the scope of protection of the invention as defined by the following claims.

## Claims

1. A system (1) for detecting light emitted by one or more outer light points (P) positioned on a road, the system comprises:

   - a detecting device (2) installable on a ground vehicle configured to detect the light coming from two different sides of the road travelled by said ground vehicle, said detecting device (2) comprising at least two light meters (6, 7) positioned parallel to the road surface;
   - a processing unit configured to process data relating to said one or more light points (P) on the basis of parameters detected by said detecting device (2) by triangulation between the advancement movement of the ground vehicle and the values measured by the light meters (6, 7);
   - an electric power supply source configured to power the various elements of the detecting device (2);
   - a remote database (10) comprising characteristic parameters (Pi) of the light points (P);
   wherein said processing unit comprises:

      - a comparison module configured to detect faulty, malfunctioning lighting bodies (P) and/or detect the presence of surrounding vegetation growth,

   wherein said comparison module is configured to compare the data of the lamp posts (P) identified by the detecting device (2) with the data recorded in the database (10),
   wherein:

      - if in the database (10) there is a lamp post (P), but this is not detected by the detecting device (2), then that lamp post (P) is indicated as faulty by the processing unit;
      - if the lamp post (P) is detected but from the comparison with the recorded data present in the database (10) the brightness value diminished over time then the lamp (P) is indicated by the processing unit as worn or as surrounding vegetation growth;
      - if the lamp post is present but the brightness thereof varies significantly between one measurement and the other, then the lamp (P) is indicated by the processing unit as malfunctioning.

2. The system according to claim 1 wherein said detecting device (2) comprises:

   - a GPS sensor;
   - a data transceiving device;
   - a divider (5) positioned vertically between the two light meters (6, 7), configured to divide the light coming from the two different sides of the lane of the road travelled by the ground vehicle;
   - a sensor configured to identify the direction of origin of the emitted light.

3. The system according to one or more of the preceding claims wherein said detecting device (2) is configured to perform measurements at a dynamic frequency on the basis of the speed of movement of the ground vehicle, preferably at a frequency comprised between 10 Hz and 20 Hz.

4. The system according to anyone of claims 1 to 4, wherein said characteristic parameters (Pi) can be one or more of the following data:

   - latitude and longitude of the lamp (P);
   - height from the ground of the lamp (P);
   - installation tilt and rotation of the lamp (P);

- photometric data, preferably power, luminous flux and spatial diffusion thereof.

5. The system according to one or more of the preceding claims wherein said processing unit comprises:

- a first calculation module configured to calculate the exact positioning and the height from the ground of each light point (P).

6. The system according to one or more of the preceding claims wherein said processing unit comprises:

- a second calculation module configured to calculate the lighting values on the road surface and compare the lighting value measured with the theoretical lighting value.

7. The system according to one or more of the preceding claims comprising a database (10) wherein all the positioning measurements of the light points (P) are stored and recorded.

8. The system according to one or more of the preceding claims comprising:

- a display module configured to generate a map of the roads with the light points P detected;
- a personal electronic device associated with a user, configured to display the data detected by a graphic interface.

9. The system according to one or more of the preceding claims wherein:

- said detecting device (2) is configured to detect parameters identifying air quality and comprises a sensor for detecting air quality;
- said processing unit (20) is configured to process data relating to environmental parameters linked to air quality.

10. A method for detecting the light emitted by one or more outer light points (P) positioned on a road, comprising the steps of:

- installing a detecting device (2) on a ground vehicle;
- detecting, by said detecting device (2), the light coming from two different sides of the road travelled by said ground vehicle; - processing characteristic data relating to said one or more light points (P) by a processing unit;
- providing a remote database (10) comprising characteristic parameters (Pi) of the light points (P);
- powering electrically the various elements of the detecting device (2).
- detecting faulty, malfunctioning lighting bodies (P) and/or detecting the presence of surrounding vegetation growth;
- comparing the data of the lamp posts (P) identified by the detecting device (2) with the data recorded in the database (10), wherein:

- if in the database (10) there is a lamp post (P), but this is not detected by the detecting device (2), then that lamp post (P) is indicated as faulty by the processing unit;
- if the lamp post (P) is detected but from the comparison with the recorded data present in the database (10) the brightness value is diminished over time then the lamp (P) is indicated by the processing unit as worn or as surrounding vegetation growth;
- if the lamp post is present but the brightness thereof varies significantly between one measurement and the other, then the lamp P is is indicated by the processing unit as malfunctioning.

11. A ground vehicle comprising a system (1) according to anyone of claims 1 to 9, wherein the detecting device (2) is installed on the roof of the vehicle configured to detect the light coming from two different sides of the road travelled by said ground vehicle.

**Patentansprüche**

1. System (1) zum Erfassen von Licht, das von einem oder mehreren äußeren Lichtpunkten (P) auf einer Straße ausgestrahlt wird, wobei das System umfasst:

- eine an einem Bodenfahrzeug installierbare Erfassungsvorrichtung (2), die so konfiguriert ist, dass sie das von zwei verschiedenen Seiten der von dem Bodenfahrzeug befahrenen Straße kommende Licht erfasst, wobei die Erfassungsvorrichtung (2) mindestens zwei parallel zur Straßenoberfläche angeordnete Lichtmesser (6, 7) umfasst;

- eine Verarbeitungseinheit, die so ausgelegt ist, dass sie Daten bezüglich des einen oder der mehreren Lichtpunkte (P) auf der Grundlage von Parametern verarbeitet, die von der Erfassungsvorrichtung (2) durch Triangulation zwischen der Vorwärtsbewegung des Bodenfahrzeugs und den von den Lichtmessern (6, 7) gemessenen Werten erfasst werden;

- eine Stromversorgungsquelle, die so ausgelegt ist, dass sie die verschiedenen Elemente der Erfassungsvorrichtung (2) mit Strom versorgt;

- eine entfernte Datenbank (10), die charakteristische Parameter (Pi) der Lichtpunkte (P) enthält; wobei die Verarbeitungseinheit umfasst:

  - ein Vergleichsmodul, das so konfiguriert ist, dass es defekte, fehlerhaft funktionierende Leuchtkörper (P) und/oder das Vorhandensein von umgebendem Pflanzenwuchs erkennt, wobei das Vergleichsmodul so konfiguriert ist, dass es die von der Erfassungsvorrichtung (2) identifizierten Daten der Laternenmasten (P) mit den in der Datenbank (10) gespeicherten Daten vergleicht,

  wobei:

  - wenn in der Datenbank (10) ein Lichtmast (P) vorhanden ist, dieser jedoch von der Erfassungsvorrichtung (2) nicht erfasst wird, dann wird dieser Lichtmast (P) von der Verarbeitungseinheit als defekt angezeigt;
  - wenn der Laternenpfahl (P) erkannt wird, aber aus dem Vergleich mit den in der Datenbank (10) gespeicherten Daten hervorgeht, dass der Helligkeitswert im Laufe der Zeit abgenommen hat, wird der Laternenpfahl (P) von der Verarbeitungseinheit als verschlissen oder als durch umgebendes Pflanzenwachstum beeinträchtigt angezeigt;
  - wenn der Laternenpfahl vorhanden ist, dessen Helligkeit jedoch zwischen zwei Messungen erheblich schwankt, wird der Laternenpfahl (P) von der Verarbeitungseinheit als defekt angezeigt.

2. System nach Anspruch 1, wobei die Erfassungsvorrichtung (2) umfasst:

   - einen GPS-Sensor;
   - eine Datenübertragungsvorrichtung;
   - einen vertikal zwischen den beiden Lichtmessern (6, 7) angeordneten Teiler (5), der so konfiguriert ist, dass er das von den beiden verschiedenen Seiten der vom Bodenfahrzeug befahrenen Fahrspur kommende Licht aufteilt;
   - einen Sensor, der so konfiguriert ist, dass er die Herkunftsrichtung des emittierten Lichts identifiziert.

3. System nach einem oder mehreren der vorstehenden Ansprüche, wobei die Erfassungsvorrichtung (2) so konfiguriert ist, dass sie Messungen mit einer dynamischen Frequenz auf der Grundlage der Bewegungsgeschwindigkeit des Bodenfahrzeugs durchführt, vorzugsweise mit einer Frequenz zwischen 10 Hz und 20 Hz.

4. System nach einem der Ansprüche 1 bis 4, wobei die charakteristischen Parameter (Pi) eine oder mehrere der folgenden Daten sein können:

   - Breiten- und Längengrad der Leuchte (P);
   - Höhe der Leuchte (P) über dem Boden;
   - Neigungswinkel und Drehung der Leuchte (P) bei der Installation;
   - photometrische Daten, vorzugsweise Leistung, Lichtstrom und räumliche Streuung derselben.

5. Das System gemäß einem oder mehreren der vorstehenden Ansprüche, wobei die Verarbeitungseinheit umfasst:

   - ein erstes Berechnungsmodul, das so konfiguriert ist, dass es die genaue Position und die Höhe über dem Boden jedes Lichtpunkts (P) berechnet.

6. Das System gemäß einem oder mehreren der vorstehenden Ansprüche, wobei die Verarbeitungseinheit umfasst:

   - ein zweites Berechnungsmodul, das so konfiguriert ist, dass es die Beleuchtungswerte auf der Fahrbahn berechnet und den gemessenen Beleuchtungswert mit dem theoretischen Beleuchtungswert vergleicht.

7. Das System gemäß einem oder mehreren der vorstehenden Ansprüche, umfassend eine Datenbank (10), in der alle Positionsmessungen der Lichtpunkte (P) gespeichert und aufgezeichnet sind.

8. Das System gemäß einem oder mehreren der vorstehenden Ansprüche, umfassend:

   - ein Anzeigemodul, das so konfiguriert ist, dass es eine Karte der Straßen mit den erfassten Lichtpunkten P erzeugt;
   - ein einem Benutzer zugeordnetes persönliches elektronisches Gerät, das so konfiguriert ist, dass es die erfassten Daten über eine grafische Benutzeroberfläche anzeigt.

9. System nach einem oder mehreren der vorstehenden Ansprüche, wobei:

   - die Erfassungsvorrichtung (2) so konfiguriert ist, dass sie Parameter zur Bestimmung der Luftqualität erfasst, und einen Sensor zur Erfassung der Luftqualität umfasst;
   - die Verarbeitungseinheit (20) so konfiguriert ist, dass sie Daten verarbeitet, die sich auf Umweltparameter beziehen, die mit der Luftqualität in Zusammenhang stehen.

10. Verfahren zum Erfassen des von einem oder mehreren äußeren Lichtpunkten (P) an einer Straße emittierten Lichts, mit den folgenden Schritten:

   - Anbringen einer Erfassungsvorrichtung (2) an einem Bodenfahrzeug;
   - Erfassen des von zwei verschiedenen Seiten der von dem Bodenfahrzeug befahrenen Straße kommenden Lichts durch die Erfassungsvorrichtung (2); - Verarbeiten von charakteristischen Daten, die sich auf den einen oder die mehreren Lichtpunkte (P) beziehen, durch eine Verarbeitungseinheit;
   - Bereitstellen einer entfernten Datenbank (10), die charakteristische Parameter (Pi) der Lichtpunkte (P) umfasst;
   - elektrische Versorgung der verschiedenen Elemente der Erfassungsvorrichtung (2);
   - Erfassen von defekten, fehlerhaft funktionierenden Beleuchtungskörpern (P) und/oder Erfassen des Vorhandenseins von umgebendem Pflanzenwuchs;
   - Vergleichen der Daten der von der Erfassungsvorrichtung (2) identifizierten Laternenmasten (P) mit den in der Datenbank (10) gespeicherten Daten, wobei:
   - wenn in der Datenbank (10) ein Laternenmast (P) vorhanden ist, dieser jedoch von der Erfassungsvorrichtung (2) nicht erfasst wird, dann wird dieser Laternenmast (P) von der Verarbeitungseinheit als defekt angezeigt;
   - wenn der Lichtmast (P) erkannt wird, aber aus dem Vergleich mit den in der Datenbank (10) gespeicherten Daten hervorgeht, dass der Helligkeitswert im Laufe der Zeit abgenommen hat, wird der Lichtmast (P) von der Verarbeitungseinheit als verschlissen oder als durch umgebendes Pflanzenwachstum beeinträchtigt angezeigt;
   - wenn der Lichtmast vorhanden ist, dessen Helligkeit jedoch zwischen zwei Messungen erheblich schwankt, wird der Lichtmast (P) von der Verarbeitungseinheit als funktionsgestört angezeigt.

11. Ein Landfahrzeug, das ein System (1) gemäß einem der Ansprüche 1 bis 9 umfasst, wobei die Erfassungsvorrichtung (2) auf dem Dach des Fahrzeugs installiert ist und so konfiguriert ist, dass sie das Licht erfasst, das von zwei verschiedenen Seiten der von dem Landfahrzeug befahrenen Straße kommt.

**Revendications**

1. Système (1) destiné à détecter la lumière émise par un ou plusieurs points lumineux extérieurs (P) situés sur une route, le système comprenant :

   - un dispositif de détection (2) pouvant être installé sur un véhicule terrestre, configuré pour détecter la lumière provenant de deux côtés différents de la route empruntée par ledit véhicule terrestre, ledit dispositif de détection (2) comprenant au moins deux photomètres (6, 7) placés parallèlement à la surface de la route ;
   - une unité de traitement configurée pour traiter des données relatives audit ou auxdits points lumineux (P) sur la base de paramètres détectés par ledit dispositif de détection (2) par triangulation entre le mouvement d'avancement du véhicule terrestre et les valeurs mesurées par les luxmètres (6, 7) ;
   - une source d'alimentation électrique configurée pour alimenter les différents éléments du dispositif de détection (2) ;

- une base de données distante (10) comprenant des paramètres caractéristiques (Pi) des points lumineux (P) ;

dans lequel ladite unité de traitement comprend :

- un module de comparaison configuré pour détecter des corps d'éclairage (P) défectueux ou défaillants et/ou détecter la présence de végétation environnante, dans lequel ledit module de comparaison est configuré pour comparer les données des lampadaires (P) identifiés par le dispositif de détection (2) avec les données enregistrées dans la base de données (10),

dans lequel :

- si, dans la base de données (10), il existe un lampadaire (P), mais que celui-ci n'est pas détecté par le dispositif de détection (2), alors ce lampadaire (P) est signalé comme défectueux par l'unité de traitement ;
- si le lampadaire (P) est détecté mais que, d'après la comparaison avec les données enregistrées dans la base de données (10), la valeur de luminosité a diminué au fil du temps, alors le lampadaire (P) est signalé par l'unité de traitement comme usé ou comme étant recouvert par la végétation environnante ;
- si le lampadaire est présent mais que sa luminosité varie de manière significative d'une mesure à l'autre, alors le lampadaire (P) est signalé par l'unité de traitement comme défectueux.

2. Système selon la revendication 1, dans lequel ledit dispositif de détection (2) comprend:

- un capteur GPS ;
- un dispositif de transmission et de réception de données ;
- un diviseur (5) positionné verticalement entre les deux luxmètres (6, 7), configuré pour diviser la lumière provenant des deux côtés différents de la voie de circulation empruntée par le véhicule terrestre ;
- un capteur configuré pour identifier la direction d'origine de la lumière émise.

3. Système selon l'une ou plusieurs des revendications précédentes, dans lequel ledit dispositif de détection (2) est configuré pour effectuer des mesures à une fréquence dynamique en fonction de la vitesse de déplacement du véhicule terrestre, de préférence à une fréquence comprise entre 10 Hz et 20 Hz.

4. Système selon l'une quelconque des revendications 1 à 4, dans lequel lesdits paramètres caractéristiques (Pi) peuvent être une ou plusieurs des données suivantes :

- la latitude et la longitude du lampadaire (P) ;
- la hauteur du lampadaire (P) par rapport au sol ;
- l'inclinaison et la rotation d'installation du lampadaire (P) ;
- des données photométriques, de préférence la puissance, le flux lumineux et la diffusion spatiale de celui-ci.

5. Système selon l'une ou plusieurs des revendications précédentes, dans lequel ladite unité de traitement comprend :

- un premier module de calcul configuré pour calculer le positionnement exact et la hauteur par rapport au sol de chaque point lumineux (P).

6. Système selon l'une ou plusieurs des revendications précédentes, dans lequel ladite unité de traitement comprend :

- un deuxième module de calcul configuré pour calculer les valeurs d'éclairement sur la surface de la route et comparer la valeur d'éclairement mesurée à la valeur d'éclairement théorique.

7. Système selon une ou plusieurs des revendications précédentes, comprenant une base de données (10) dans laquelle toutes les mesures de positionnement des points lumineux (P) sont stockées et enregistrées.

8. Système selon une ou plusieurs des revendications précédentes, comprenant :

- un module d'affichage configuré pour générer une carte des routes avec les points lumineux P détectés ;
- un appareil électronique personnel associé à un utilisateur, configuré pour afficher les données détectées via une interface graphique.

9. Système selon l'une ou plusieurs des revendications précédentes, dans lequel :

- ledit dispositif de détection (2) est configuré pour détecter des paramètres identifiant la qualité de l'air et comprend un capteur pour détecter la qualité de l'air ;
- ladite unité de traitement (20) est configurée pour traiter des données relatives à des paramètres environnementaux liés à la qualité de l'air.

10. Procédé de détection de la lumière émise par un ou plusieurs points lumineux extérieurs (P) positionnés sur une route, comprenant les étapes suivantes :

- installer un dispositif de détection (2) sur un véhicule terrestre ;
- détecter, à l'aide dudit dispositif de détection (2), la lumière provenant de deux côtés différents de la route parcourue par ledit véhicule terrestre ; - traiter des données caractéristiques relatives audit ou auxdits points lumineux (P) à l'aide d'une unité de traitement ;
- fournir une base de données distante (10) comprenant des paramètres caractéristiques (Pi) des points lumineux (P) ;
- alimenter électriquement les différents éléments du dispositif de détection (2) ;
- la détection de luminaires (P) défectueux ou défaillants et/ou la détection de la présence de végétation environnante ;
- comparer les données des lampadaires (P) identifiés par le dispositif de détection (2) avec les données enregistrées dans la base de données (10), dans laquelle :
- si, dans la base de données (10), il existe un lampadaire (P), mais que celui-ci n'est pas détecté par le dispositif de détection (2), alors ce lampadaire (P) est signalé comme défectueux par l'unité de traitement ;
- si le lampadaire (P) est détecté mais que, d'après la comparaison avec les données enregistrées dans la base de données (10), la valeur de luminosité a diminué au fil du temps, alors le lampadaire (P) est signalé par l'unité de traitement comme usé ou comme étant recouvert de végétation environnante ;
- si le lampadaire est présent mais que sa luminosité varie de manière significative d'une mesure à l'autre, alors le lampadaire (P) est signalé par l'unité de traitement comme défectueux.

11. Véhicule terrestre comprenant un système (1) selon l'une quelconque des revendications 1 à 9, dans lequel le dispositif de détection (2) est installé sur le toit du véhicule et est configuré pour détecter la lumière provenant de deux côtés différents de la route empruntée par ledit véhicule terrestre.

Fig.1

Fig.2

Fig.3

# Fig.4

# EP 4 323 733 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017001233 A1